# EUROPEAN PATENT APPLICATION

(11) **EP 1 916 827 A2**
(43) Date of publication of application: **30.04.2008**
(21) Application number: 07119069.8
(22) Date of filing: 23.10.2007
(51) Int. Cl.: H04M 1/02

(54) **Hinge mechanism and portable terminal**

(30) Priority: 24.10.2006 JP 2006288249
(71) Applicant: OMRON CORPORATION, Kyoto-shi, Kyoto 600-8530 (JP)
(72) Inventor: Takamori, Satoshi, Kyoto Kyoto 600-8530 (JP); Nishida, Masami, Kyoto Kyoto 600-8530 (JP)
(74) Representative: Brykman, Georges

(57) **Abstract**

The present invention aims to provide a hinge mechanism (10,110,310) for realizing a semi-auto opening operation with a simple operation, and a portable terminal (1,101,301). A hinge mechanism (10,110,310) for connecting a first housing (2,102) and a second housing (7,107), which configure a portable terminal (1,101,301), in a foldable opening/closing manner through pivoting is arranged with a first cam (50,150,350) fixed to the first housing (2,102); a second cam (70,170,370) fixed to the second housing (7,107); a press biasing unit (45,145,345) for press biasing the first cam (50,150,350) and the second cam (70,170,370) in a direction of approaching each other (Y1) with the first convex part (53,153,353) of the first cam (50,150,350) and the second convex part (71,171,371) of the second cam (70,170,370) opposing each other; and a pivot biasing unit (25,125,325) for biasing the first cam (50,150,350) and the second cam (70,170,370) to relatively pivot in an opening direction (Y2) with the pivot axis as the center; wherein the pivoting in the opening direction (Y2) by the pivot biasing unit (25,125,325) is stopped when the first convex part (53,153,353) and the second convex part (71,171,371) contact each other, and the press biasing unit (45,145,345) has a press biasing force of a strength that the other contacting part does not ride over an inclined surface (53a,153a,353a) by the pivot bias of the pivot biasing unit (25,125,325).

## Description

### BACKGROUND OF THE INVENTION

### 1. Field of the Invention

The present invention relates to a hinge mechanism used in a portable terminal such as portable telephone and PDA in which a first housing and a second housing are connected in a foldable opening/closing manner, and a portable terminal.

### 2. Description of the related art

Conventionally, a hinge mechanism enabling a foldable opening/closing manner referred to as a clamshell type is being widely used in portable terminals such as portable telephone. A mechanism for moving from a closed state to an opened state by a one-touch operation of pushing a button arranged at an end of a pivot shaft to realize semi-auto opening operation has been proposed for the hinge mechanism enabling the foldable opening/closing manner (see Japanese Laid-Open Patent Publication No. 8-125725 and Japanese Laid-Open Patent Publication No. 2003-202013).

However, such mechanism has difficulty in terms of operation since a small push button must be pushed in a pivot axis direction. If the push button is pushed by impact etc. while the portable terminal is being carried in a bag, the portable terminal may be unintentionally open operated. A method of strengthening a biasing force of a push returning spring of the button may be adopted to prevent such unintentional opening operation, but a strong force is required to push the button if the biasing force is made stronger, and thus is not user friendly.

### SUMMARY OF THE INVENTION

In view of the above problems, the present invention aims to provide a hinge mechanism for realizing a semi-auto opening operation with a simple operation, and a portable terminal.

The present invention relates to a hinge mechanism for connecting a first housing and a second housing, which configure a portable terminal, in a foldable opening/closing manner through pivoting; the hinge mechanism including a first cam including a first convex part projecting in a pivot axis direction at around the pivot axis, and being fixed to the first housing; a second cam including a second convex part which engages the first convex part of the first cam projecting in the pivot axis direction at around the pivot axis, and being fixed to the second housing; a press biasing unit for press biasing the first cam and the second cam in a direction of approaching each other with a first opposing surface including the first convex part and a second opposing surface including the second convex part opposing each other; and a pivot biasing unit for biasing so that the first cam and the second cam relatively pivot in an opening direction with the pivot axis as the center; wherein at least one of contacting parts at where the first convex part and the second convex part contact each other when stopping the pivoting in the opening direction by the pivot biasing unit is formed by an inclined surface inclining in a pivoting direction; and the press biasing unit has a press biasing force of a strength that the other contacting part does not ride over the inclined surface only by the pivot bias of the pivot biasing unit.
The portable terminal is configured by a terminal that is portable such as portable telephone or PDA (Personal Digital Assistants).

According to the invention, a hinge mechanism that realizes semi-auto opening operation with a simple operation is obtained. For instance, if the hinge mechanism is attached to the portable terminal, the semi-auto opening operation of automatically pivoting in the opening direction by the pivot bias of the pivot biasing unit once the first housing and the second housing are pivoted in the opening direction by hand against the press biasing force of the press biasing unit and the other contacting part rides over the inclined surface is realized.

In one aspect of the invention, a slope for assisting the pivot by the pivot biasing unit using the press biasing force of the press biasing unit is arranged on the first opposing surface or the second opposing surface.
Thus, the reliability of completely pivoting to the fully opened state in semi-auto is enhanced.

In another aspect of the invention, a pivot attachment part for allowing pivoting to shift the first housing and the second housing in a folded state in which the first housing and the second housing overlap; and an engagement releasing unit for releasing rotational engagement in the opening direction of the first cam and the second cam by the press biasing unit when the first housing and the second housing are pivoted so as to be shifted are further arranged.
Thus, a hinge mechanism that opens to the fully opened state in semi-auto by simply shifting the first housing and the second housing is obtained.

The present invention also relates to a portable terminal including the hinge mechanism, the first housing, and the second housing; and a display unit for displaying an image on one of the first housing or the second housing; wherein an input unit for enabling input operation is arranged on the other housing.
Thus, a clamshell type portable terminal that pivots in the opening direction in semi-auto is obtained.

The hinge mechanism that realizes semi-auto opening operation with a simple operation and the portable terminal are provided.

### BRIEF DESCRIPTION OF THE DRAWINGS

FIG. 1 shows a perspective view of an outer appearance of a portable telephone;
FIG. 2 shows an exploded perspective view of a hinge device;
FIG. 3 shows an exploded perspective view of the hinge device;
FIG. 4 shows a perspective view of a state in which a housing of the hinge device is detached;
FIG. 5 shows a perspective view of a state in which the housing of the hinge device is detached;
FIG. 6 shows an explanatory view describing the rotating operation of the hinge device in front view;
FIG. 7 shows an explanatory view describing the rotating operation of the hinge device;
FIG. 8 shows an explanatory view describing a position of a hill shaped convex part during the rotating operation;
Fig. 9 shows an explanatory view describing the rotating operation of the portable telephone in perspective view;
FIG. 10 shows an exploded perspective view of a hinge device of example 2;
FIG. 11 shows an exploded perspective view of the hinge device of example 2;
FIG. 12 shows a perspective view of the hinge device of example 2;
FIG. 13 shows a perspective view of the hinge device of example 2;
FIG. 14 shows an explanatory view describing the rotating operation of the hinge device of example 2 in front view;
FIG. 15 shows an explanatory view describing the rotating operation of the hinge device of example 2 in rear view;
FIG. 16 shows an explanatory view describing the movement of the main body side cam 150 and a cover side cam 170;
FIG. 17 shows an explanatory view describing the rotating operation of the portable telephone in rear view;
FIG. 18 shows an explanatory view describing the rotating operation of the portable telephone in top view;
Fig. 19 shows an exploded perspective view of a hinge device of example 3;
Fig. 20 shows an exploded perspective view of the hinge device of example 3;
FIG. 21 shows a perspective view of the hinge device of example 3;
FIG. 22 shows a perspective view of the hinge device of example 3;
FIG. 23 shows an explanatory view describing the rotating operation of the hinge device of example 3 in front view;
FIG. 24 shows an explanatory view describing the rotating operation of the hinge device of example 3 in front view;
FIG. 25 shows an explanatory view describing the rotating operation of the hinge device of example 3 in rear view;
FIG. 26 shows an explanatory view describing the rotating operation of the hinge device of example 3 in rear view;
FIG. 27 shows an explanatory view describing the movement of the main body side cam and the cover side cam; and
FIG. 28 shows an explanatory view descrying the movement of the main body side cam and the cover side cam.

### DETAILED DESCRIPTION OF THE PREFERRED EMBODIMENTS

One embodiment of the present invention will now be described according to the drawings.

### [Example 1]

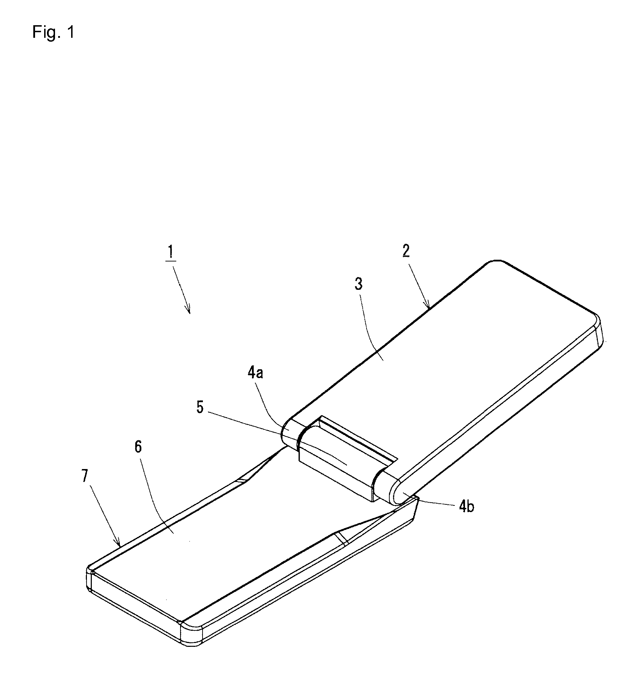

Fig. 1 shows a perspective view of an outer appearance of a portable telephone 1.
The portable telephone 1 is configured by a main body 7 having a key arrangement surface 6 on which input keys and the like (not shown) are arranged, and a cover 2 including a display surface 3 on which a liquid crystal screen and the like (not shown) are arranged. The cover 2 and the main body 7 are connected in a foldable opening/closing manner from a closed state in which the key arrangement surface 6 and the display surface 3 are facing and overlapping each other to an opened state in which the surfaces are rotated by 170 degrees and opened by respectively arranged connecting parts 4 (4a, 4b), and a connecting part 5.
A hinge device 10 described below is accommodated inside the connecting part 5 of the main body 7 and inside the connecting part 4b of the cover 2.

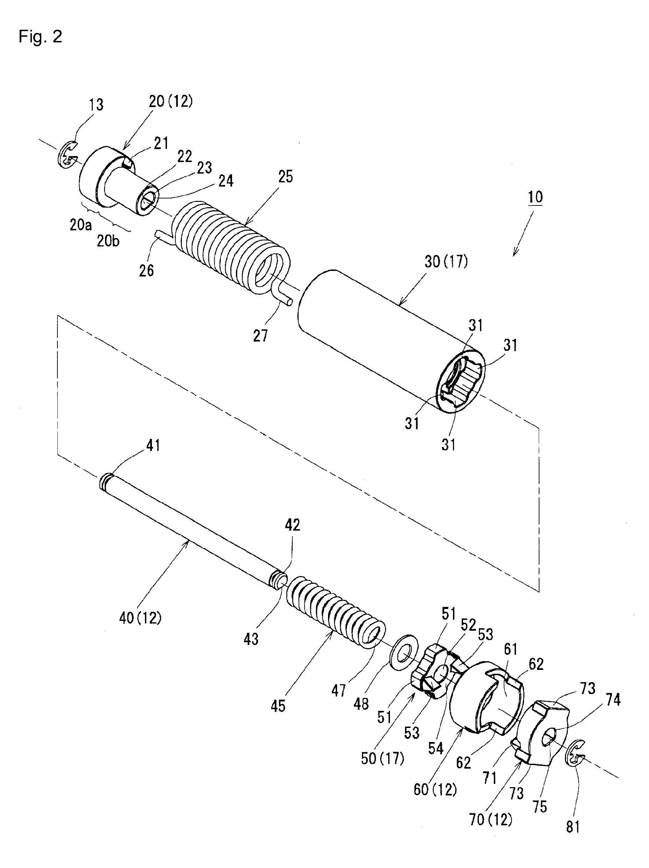

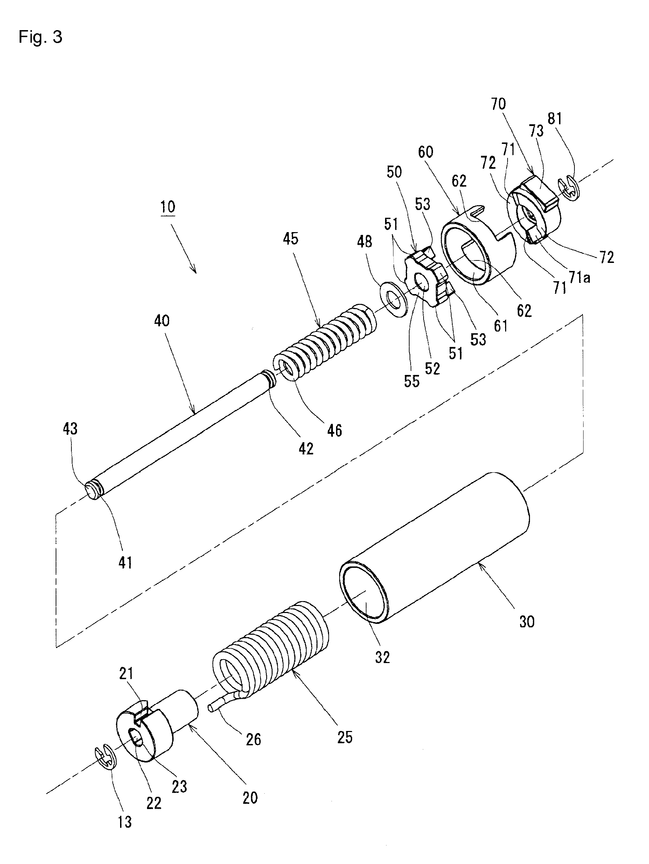

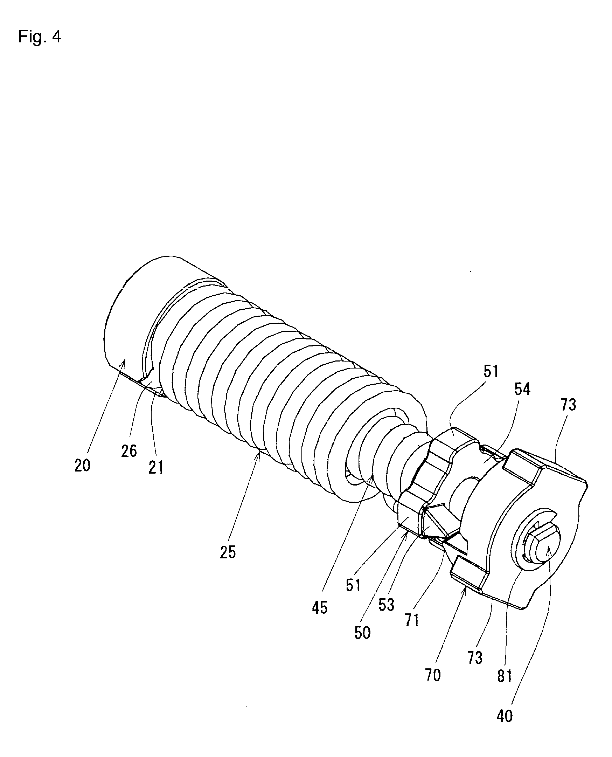

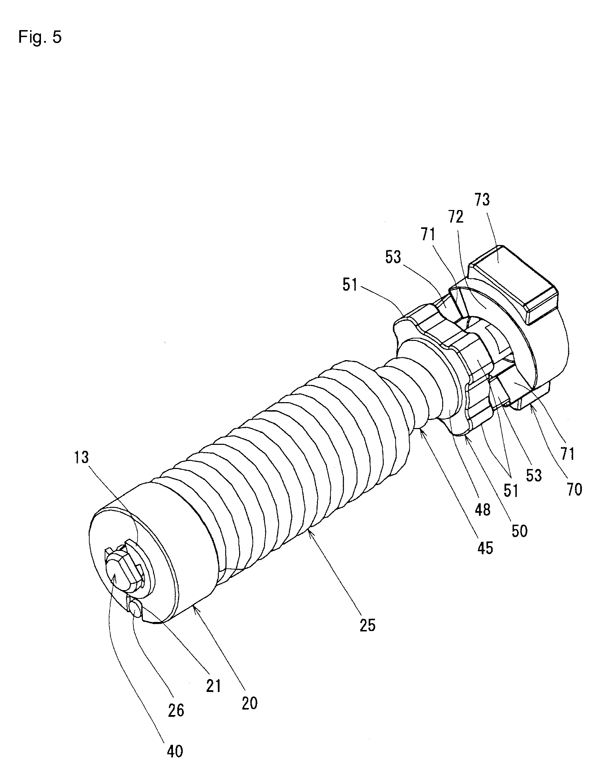

FIGS. 2 and 3 show exploded perspective views of the hinge device 10. FIGS. 4 and 5 show perspective views of a state in which a housing of the hinge device 10 is detached.
The hinge device 10 is configured by an E ring 13, a stopper 20, a pivot spring 25, a main body side housing 30, a shaft 40, a press spring 45, a washer 48, a main body side cam 50, a cover side housing 60, a cover side cam 70, and an E ring 81.

The stopper 20 is configured by a shaft part 20b of a substantially cylindrical shape, and a head part 20a of a substantially cylindrical shape having an outer periphery larger than the shaft part 20b. A pivot spring attachment groove 21 for fixing a first end 26 of the pivot spring 25 is formed on an outer peripheral surface of the head part 20a. The stopper 20 is also formed with a shaft insertion hole 23 that communicates the inside of the head part 20a and the shaft part 20b, and enables the insertion of the shaft 40. The shaft insertion hole 23 has a rotation engagement surface 22, which cross section has a shape in which one part of a circle is cut out, where a cutout surface 43 of the inserted shaft 40 comes into surface contact with the rotation engagement surface 22. Therefore, the shaft 40 and the stopper 20 are fixed so as not to relatively rotate. A press supporting end face 24 (FIG. 2) that comes into surface contact with a first end face 46 (FIG. 3) of the press spring 45 and supports the pressing is formed at an end part of the shaft part 20b.

The pivot spring 25 is a spiral shaped helical spring and is formed to a size that an inner periphery of the pivot spring 25 is larger than an outer periphery of the shaft part 20b and an outer periphery of the pivot spring is smaller than an outer periphery of the head part 20a. The pivot spring 25 has a first end 26 and a second end 27 standing up in an axial direction formed at both ends. The pivot spring 25 has the shaft part 20b of the stopper 20 inserted therein from the first end 26 side, and the first end 26 is attached to the pivot spring attachment groove 21 of the stopper 20.

The main body side housing 30 is formed with an insertion hole 32 (FIG. 3) on the stopper side 20 for inserting the stopper 20 including the head part 20a. An inner periphery of the insertion hole 32 is formed to a size slightly larger than the outer periphery of the head part 20a of the stopper 20, and is configured so that the stopper 20 rotates without stress inside the insertion hole 32. A slide groove 31 for inserting and non-rotatably fixing the main body side cam 50 is formed on the opposite side of the insertion hole 32 of the main body side housing 30. A space communicating from the insertion hole 32 to the slide groove 31 is created inside the main body housing 30, and the press spring 45 inserted with the shaft 40 is inserted in a freely extending and contracting manner. A pivot spring attachment hole (not shown) is formed inside the main body housing 30, and the second end 27 of the pivot spring 25 is attached and fixed in the pivot spring attachment hole.

The shaft 40 overall has a substantially columnar shape, and is formed at both ends with terminating end grooves 41, 42 for attaching E rings 13, 81, respectively. The shaft 40 is formed with the cutout surface 43 by cutting one side surface of the columnar shape.

The press spring 45 is a spiral shaped helical spring, and is formed to a size that an inner periphery of the press spring 45 is larger than the outer periphery of the shaft 40, and an outer periphery of the press spring 45 can be inserted to the inside of the main body housing 30 and the inside of the pivot spring 25. The press spring 45 is formed to a spiral shape not only at the core part but also up to both ends. The press spring 45 has the first end face 46 coming into surface contact with the press supporting end face 24 of the stopper 20, and a second end face 47 coming into surface contact with the washer 48 so as to be sandwiched by the stopper 20 and the washer 48.

The washer 48 has an inner periphery of a size allowing the shaft 40 to be inserted in a freely rotating manner, and is formed to a size that the second end face 47 of the press spring 45 can be reliably came into surface contact with the washer 48.

An engagement projection 51 that engages, and attaches in a non-rotatable manner and in a slidable manner in a pivot axis direction to the slide groove 31 of the main body housing 30 is formed on an outer periphery of the main body side cam 50. The engagement projection 51 is formed so that a thickness in the pivot axis direction is shorter than a length in the pivot axis direction of the slide groove 31. An insertion hole 52 for inserting the shaft 40 in a freely rotating manner is formed at a center of the main body side cam 50. Two hill shaped convex parts 53 of hill shape having two inclined surfaces in a rotating direction are formed symmetric to the center axis on an opposing surface 54 with respect to the cover side cam 70 of the main body side cam 50. The hill shaped convex part 53 is formed slightly on the inner side from the engagement projection 51 projecting the most in a radial direction in the main body side cam 50. A smooth surface 55 to which the washer 48 contacts is formed on a surface opposite to the opposing surface 54 of the main body side cam 54.

The cover side housing 60 is a cover of a substantially cylindrical shape having an outer peripheral size same as the main body side housing 30, where a thickness of the cylindrical shape is formed to be substantially the same as a thickness from the slide groove 31 to an outer periphery of the main body side housing 30. Thus, the main body side cam 50 accommodated in the slide groove 31 of the main body side housing 30 slidably moves in the pivot axis direction, projects out from the main body side housing 30, and has one part inserted to the inside of the cover side housing 60. Thus, the slide movement in the pivot axis direction of the main body side cam 50 is stabilized with the main body side housing 30 and the main body side cam 50 maintaining a relatively non-rotatable state at the slide groove 31, and furthermore, the cover side housing 60 and the main body side housing 30 can relatively rotate even if the main body side cam 50 is projected out from the main body side housing 30 and partially inserted into the cover side housing 60 since the inner surface 61 of the cover side housing 60 is formed to a circular shape. A fixing concave part 62 that engages a fixing projection 73 of the cover side cam 70 is formed on a side opposite to the main body side housing 30 in the cover side housing 60.

A fixing projection 73 that engages the fixing concave part 62 of the cover side housing 60 and non-rotatably fixes with respect to the cover side housing 60 is formed in a projecting manner on an outer peripheral surface of the cover side cam 70. An insertion hole 74 through which the shaft 40 is inserted is formed at the center of the cover side cam 70. The insertion hole 74 has a rotation engagement surface 75, which cross section has a shape in which one part of a circle is cut out, where the cutout surface 43 of the inserted shaft 40 comes into surface contact with the rotation engagement surface 75. Therefore, the shaft 40 and the cover side cam 70 are fixed so as not to relatively rotate. Two rotation engagement convex parts 71 projecting towards the main body side cam 50, and two slopes 72 of circular arc shape seen from the pivot axis direction inclined in one line in side view from the apex of one rotation engagement convex part 71 towards a base of the other rotation engagement convex part 71 are formed on a surface facing the main body side cam 50 of the cover side cam 70. The slope 72 is formed to an inclination in which a side on which the hill shaped convex part 53 of the main body side cam 50 is positioned in the closed state is high, and the side on which the hill shaped convex part 53 of the main body side cam 50 is positioned in the opened state is low. A perpendicular surface 71 a perpendicular to the pivot axis direction is formed on a side opposite to the slope 72 of the rotation engagement convex part 71.

The hinge device 10 configured by such components has the stopper 20, the shaft 40, the cover side housing 60, and the cover side cam 70 forming an integrated cover side unit 12 and non-rotatably fixed in a pivoting direction in the connecting part 4b of the cover 2, and the main body side housing 30 and the main body side cam 50 forming an integrated main body side unit 17 and non-rotatably fixed in the pivoting direction in the connecting part 5 of the main body 7. Therefore, the cover side unit 12 and the main body side unit 17 relatively rotate with the pivoting in an opening/closing direction of the cover 2 and the main body 7. In regards to such rotation, the pivot spring 25 is constantly biased in the opening direction, and the press spring 45 biases the main body side cam 50 to constantly press the cam side cam 70.

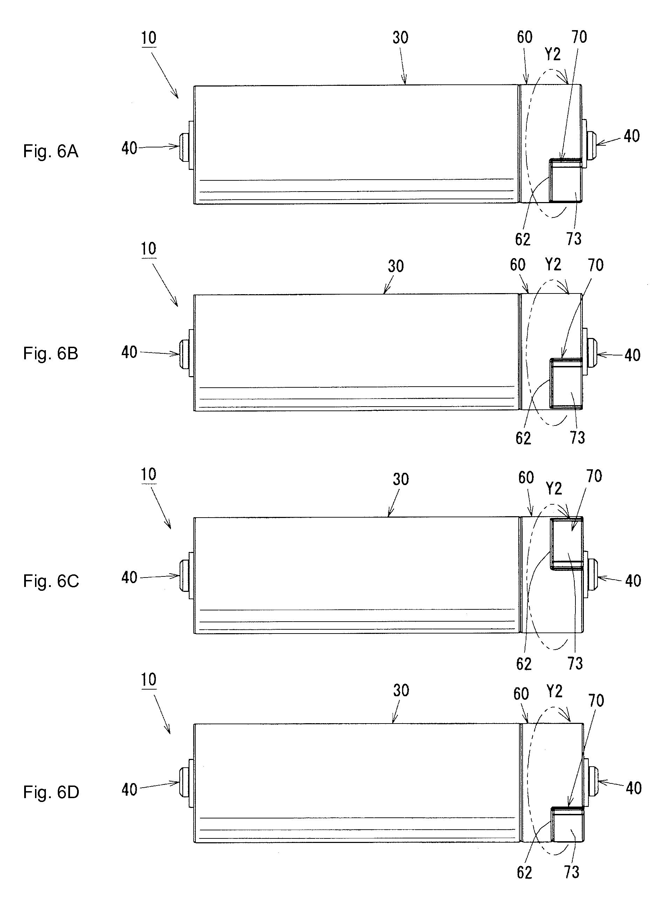

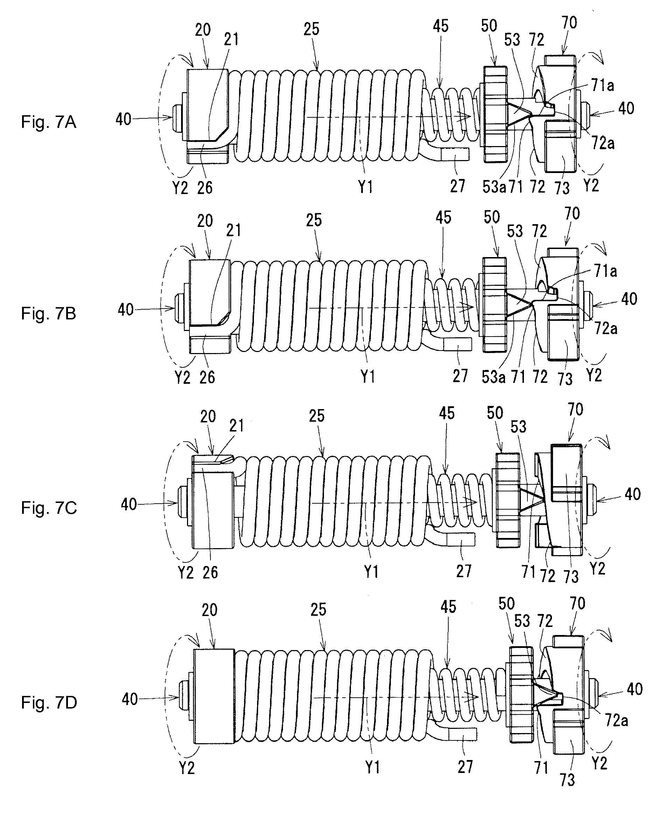

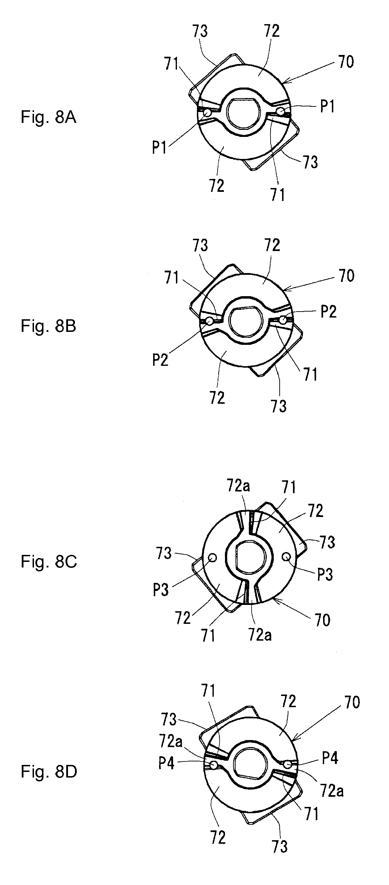

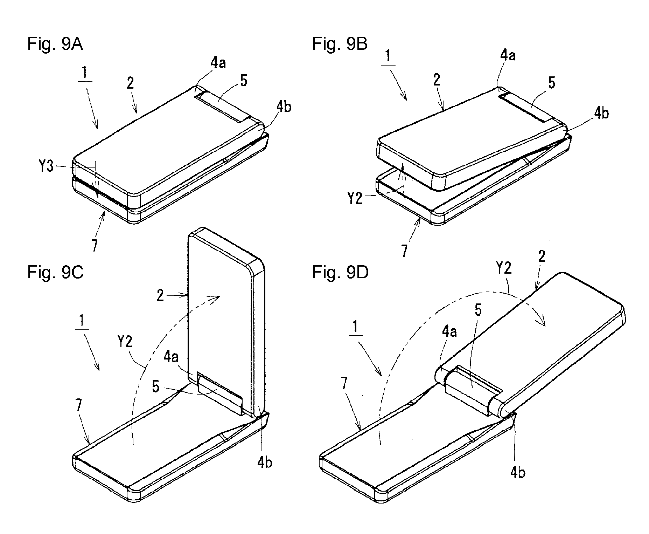

FIG. 6 shows an explanatory view describing the rotating operation of the hinge device 10 in front view, FIG. 7 shows an explanatory view describing the rotating operation of the hinge device 10 in front view with the main body side housing 30 and the cover side housing 60 which are omitted, FIG. 8 shows an explanatory view describing a position of the hill shaped convex part 53 of the main body side cam 50 with respect to the cover side cam 70 during the rotating operation, and FIG. 9 shows an explanatory view describing the rotating operation of the portable telephone 1 in perspective view.

As shown in (A), in the closed state in which the cover 2 and the main body 7 of the portable telephone 1 (see FIG. 9) are closed, the hill shaped convex part 53 of the main body side cam 50 (see FIG. 7) is positioned at a position P1 (see FIG. 8) on the perpendicular surface 71 a side from the apex of the rotation engagement convex part 71 of the cover side cam 70. In this state, an inclined surface 53a on the opening operation engagement side of the hill shaped convex part 53 contacts and rotatably engages the apex of the rotation engagement convex part 71 by a biasing force in the direction of the arrow Y1 of the press spring 45 (see FIG. 7). That is, the biasing force in the direction of the arrow Y2 of the pivot spring 25 attempts to rotate the main body side cam 50 in the opening direction (direction of arrow Y2) with respect to the cover side cam 70, but a press biasing force in the direction of the arrow Y1 of the press spring 45 excels a rotation biasing force, and thus as a whole, is biased in the closing direction shown in the direction of the arrow Y3 of FIG. 9A and stopped in the non-rotatable state.

As shown in (B), when the cover 2 and the main body 7 of the portable telephone 1 (see FIG. 9) are slightly pivoted (e.g., about eight degrees) in the opening direction by the user, the apex of the hill shaped convex part 53 of the main body side cam 50 (see FIG. 7) rides over the apex of the rotation engagement convex part 71 of the cover side cam 70 to be positioned at a position P2 (see FIG. 8) contacting the slope 72. In this state, the press biasing force by the press spring 45 is switched to the biasing force of rotating the main body side cam 50 in the opening direction with respect to the cover side cam 70 by the slope 72. The rotation engagement is thereby released, and the main body side cam 50 and the cover side cam 70 are relatively rotated in the opening direction by the rotation biasing force of the pivot spring 25, where such rotation is assisted by the press spring 45. Thereafter, the cover 2 and the main body 7 of the portable telephone 1 (see FIG. 9) are automatically pivoted in the opening direction.

As shown in (C), the hill shaped convex part 53 of the main body side cam 50 slidably moves on the slope 72 of the cover side cam 70 while automatically pivoting in the opening direction by the biasing force of the pivot spring 25 (see FIG. 7) and the press spring 45.

As shown in (D), when the cover 2 and the main body 7 of the portable telephone 1 are pivoted to a fully opened position, the hill shaped convex part 53 of the main body side cam 50 falls into a concave part 72a formed at a back end of the slope 72 of the cover side cam 70 by the press biasing force of the press spring 45, and stops in the opened state. The click feeling at the fully opened position is provided when falling into the concave part 72a.

In the closing operation, the rotation opposite to the opening operation described above is carried out when the user pivots and moves the cover 2 and the main body 7 towards the closed state by hand. At the point the apex of the hill shaped convex part 53 rides over the apex of the rotation engagement convex part 71, the press biasing force of the press spring 45 switches from the biasing force in the opening direction to the biasing force in the closing direction, and moves to a closed position shown in (A), and stops. A satisfactory click feeling is obtained when the apex of the hill shaped convex part 53 rides over the rotation engagement convex part 71, and thus the user can recognize the termination of the movement to the closed state.

According to the above configuration and operation, the portable telephone 1 of clamshell type of semi-auto opening operation that automatically pivots to the fully opened position when the user slightly pivots the cover 2 and the main body 7 in the opening direction by hand is obtained.

Since a small button does not need to be pushed as in a conventional art, and the semi-auto opening operation is realized with an intuitive operation of opening the cover 2 and the main body 7, thus the degree of satisfaction of the user can be enhanced.

Furthermore, in the method of pushing the button of the conventional art, a force required for pushing the button is the same as the biasing force of the spring for returning the button, whereas the portable telephone 1 described above realizes the semi-auto opening operation by the rotating operation of the cover 2 and the main body 7 in which the entire rotation radius is significantly larger than the rotation radius of the hinge device 10 with respect to the biasing force of the pivot spring 25 and the press spring 45 in the hinge device, and thus can be operated with a small force by the principle of leverage. Therefore, the portable telephone 1 in which the small button does not need to be pushed with a strong force, and the operation feeling is very satisfactory is provided. The effect thereof is very effective for users having weak strength such as elderly and children.

Since the pushing button does not need to be arranged, the hinge device 10 will not affect the outer appearance of the portable telephone 1, and the portable telephone 1 excelling in appearance can be easily provided.

### [Example 2]

A hinge device 110 of example 2 will now be described. The hinge device 110 has a mechanism similar to example 1 described above, but additionally has a function of automatically rotation operating the cover 102 and the main body 107 by shifting them in a left and a right direction in an overlapped state.

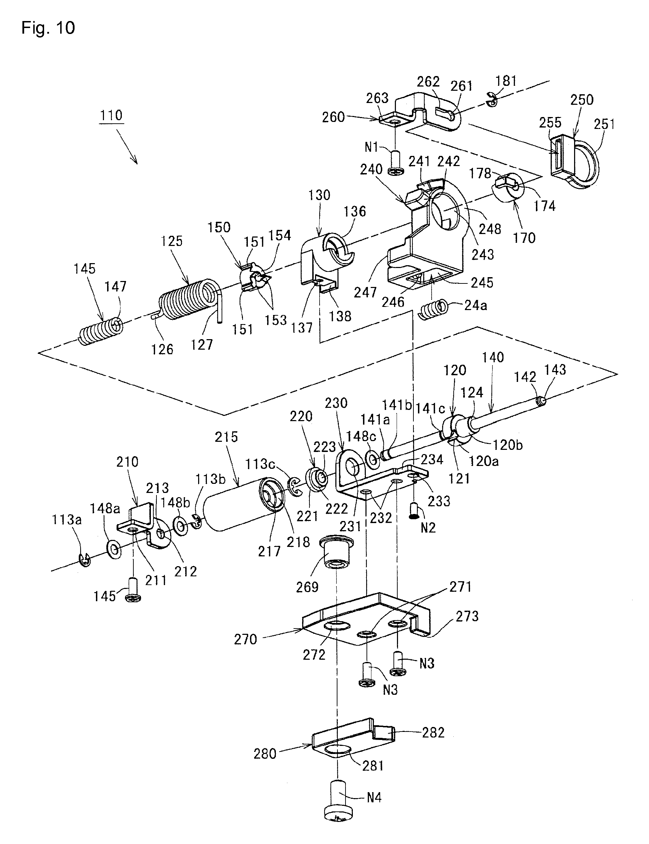

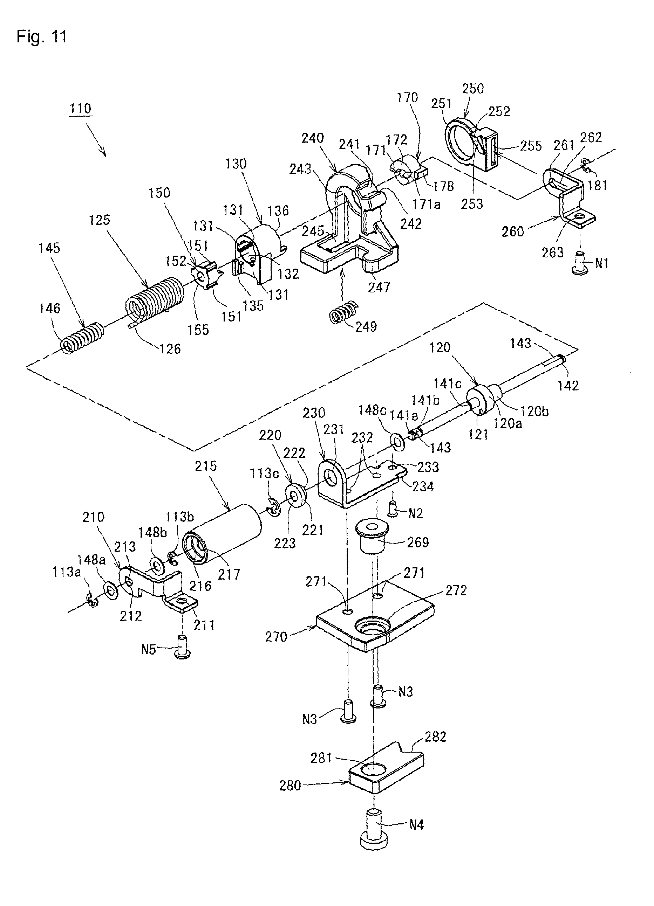

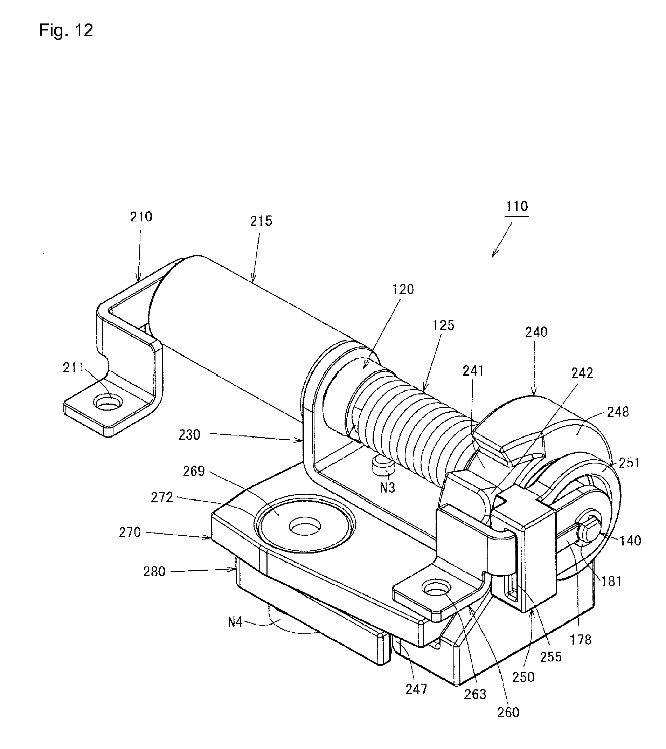

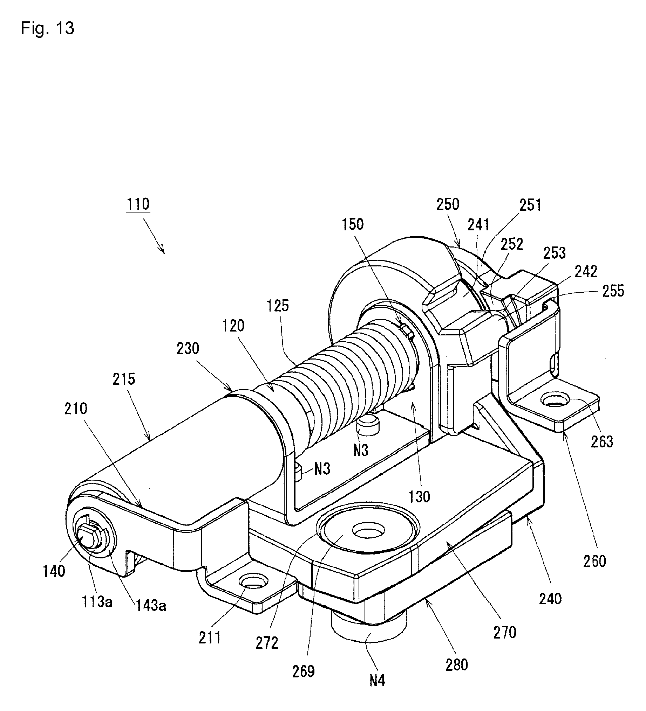

FIGS. 10 and 11 show exploded perspective views of the hinge device 110, and FIGS. 12 and 13 show perspective views of a state in which the housing of the hinge device is detached.
The hinge device 110 is configured by E-rings 113a, 113b, 113c, 181, washers 148a, 148b, 148c, a left attachment arm 210, a width adjustment case 215, a slidably moving ring 220, a supporting arm 230, a stopper 120, a shaft 140, a press spring 145, a pivot spring 125, a main body side cam 150, a main body side housing 130, an engagement releasing member 240, a cover side cam 170, an open/close stabilizing member 250, a right attachment arm 260, a boss 269, a lateral rotation base 270, a fixing cam 280, and screws N1 to N5.

The washers 148a, 148b, 148c have an inner periphery formed to a size that the shaft 140 can be inserted in a freely rotating manner.
The left attachment arm 210 is an arm for attaching the hinge device 110 to the cover 102, and a screw hole 211 in an up and down direction for fixing to the cover 102 with the screw N5 and an insert attachment hole 212 in the left and right direction for non-rotatably fixing the shaft 140 are formed. A rotation engagement surface 213 for engaging with a cutout surface 143 of the shaft 140 and non-rotating the shaft 140 is formed in the insert attachment hole 212.

The width adjustment case 215 is formed with an insertion hole 217 of a cylindrical shape for inserting the shaft 140, and has concave parts 216, 218 formed at both ends. The concave part 218 is formed to a circular shape to a size of rotatably accommodating the slidably moving ring 220. The difference in size by model of the portable telephone 101 is easily responded by simply changing a length of the width adjustment case 215 by the width adjustment case 215.

The slidably moving ring 220 is formed to a substantially ring shape having a small radius part 222 of a size of exactly fitting to a shaft supporting hole 231 in the left and right direction of the supporting arm 230, and a large diameter part 221 that does not fit into the shaft supporting hole 231. An insertion hole 223 that allows the shaft 140 to be rotatably inserted is formed at the center of the slidably moving ring 220.

The supporting arm 230 is formed by a plate shaped member bent to a substantially L-shape, and is formed with the shaft supporting hole 231 passing through in the left and right direction, and screw holes 232, 233 passing through in the up and down direction. A fixing guide 234 for non-rotatably fixing the main body side housing 130 is formed at a right end at where a screw hole 233 is formed.

The stopper 120 is configured by a shaft part 120b of substantially cylindrical shape, and a head part 120a of a substantially cylindrical shape having an outer periphery larger than the shaft part 120b, and is integrated with the shaft 140. Therefore, the shaft 140 and the stopper 120 are fixed so as not to relatively rotate. A pivot attachment groove 121 for fixing a first end 126 of the pivot spring 125 is formed at an outer peripheral surface of the head part 120a. A press supporting end face 124 (FIG. 10) that comes into surface contact with a first end face 146 (FIG. 3) of the press spring 145 and supports pressing is formed at an end of the shaft part 120b.

The shaft 140 is formed with attachment grooves 141 a, 141 b, 141 c, 142 overall having a substantially columnar form and provided to attach the E-rings 113a, 113b, 113c, 181 at both ends and the intermediate part. The shaft 140 is formed with the cutout surface 143 by cutting out one side surface of the columnar shape.

The press spring 145 is a spiral shaped helical spring and is formed to a size that an inner periphery of the press spring 145 is larger than an outer periphery of the shaft 140 and an outer periphery of the press spring 145 can be inserted inside the main body side housing 130 and inside the pivot spring 125. The press spring 145 is formed to a spiral form not only at the core part but up to both ends. The press spring 145 has the first end 146 coming into surface contact with the press supporting end face 124 of the stopper 120, and a second end 147 coming into surface contact with the smooth surface 155 of the main body side cam 150 so as to be sandwiched between the stopper 120 and the main body side cam 150.

The pivot spring 125 is a spiral shaped helical spring and is formed to a size that an inner periphery of the pivot spring 125 is larger than an outer periphery of the shaft part 120b and an outer periphery of the pivot spring 125 is smaller than the outer periphery of the head part 20a. The pivot spring 125 has the first end 126 and a second end 127 standing up in the axial direction formed at both ends. The pivot spring 125 has the shaft part 120b of the stopper 120 inserted therein from the first end 126 side, and the first end 126 is attached to the pivot spring attachment groove 121 of the stopper 20.

An engagement projection 151 that engages and attaches in a non-rotatable manner and in a slidable manner in the pivot axis direction to the slide groove 131 of the main body side housing 130 is formed on an outer periphery of the main body side cam 150. The engagement projection 151 is formed so that a thickness in the pivot axis direction is shorter than a length in the pivot axis direction of the slide groove 131. An insertion hole 152 for inserting the shaft 140 in a freely rotating manner is formed at the center of the main body side cam 150. Two hill shaped convex parts 153 of hill shape having two inclined surfaces in the rotating direction are formed symmetric to the center axis on an opposing surface 154 with respect to the cover side cam 170 of the main body side cam 150. The hill shaped convex part 153 is formed slightly on the inner side than the engagement projection 151 projecting the most in the radial direction in the main body side cam 150. A smooth surface 155 to which the second end face 147 of the press spring 145 contacts is formed on a surface opposite to the opposing surface 154 of the main body side cam 150.

The main body side housing 130 is formed with an insertion hole 132 (FIG. 11) on the stopper side 120 for inserting the stopper 120 including the head part 120a. An inner periphery of the insertion hole 132 is formed to a size slightly larger than an outer periphery of the head part 120a of the stopper 120, and is configured so that the stopper 120 rotates without stress inside the insertion hole 132. A slide groove 131 for inserting and non-rotatably fixing the main body side cam 150 is formed on a side opposite to the insertion hole 132 of the main body side housing 130. A space communicating from the insertion hole 132 to the slide groove 131 is created inside the main body housing 130, and the press spring 145 inserted with the shaft 140 is inserted in a freely extending and contracting manner. An engagement part 135 attached and engaged with the second end 127 of the pivot spring 125 is formed on a side surface on the supporting arm 230 side of the main body side housing 130.

The engagement releasing member 240 includes a ring shaped guide part 243 for allowing insertion of the cylindrical portion of the main body side housing 130, and a guide hole 245 is formed in a rectangular shape at a lower side. An attachment projection 246 for attaching a lateral rotation biasing spring 249 that extends and contracts in the left and right direction is formed in the guide hole 245. A slide projection 247 for slidably moving the engagement releasing member 240 by being pushed by the fixing cam 280 when the cover 102 is laterally rotated is formed next to the guide hole 245. A concave part 241 and an engagement releasing convex part 242 adjacent to the concave part 241 are formed at an outer peripheral portion of the ring shaped guide part 243. A guide surface 248 or the smooth plane is formed on the right attachment arm 260 side of the ring shaped guide part 243.

A fixing projection 178 that engages the fixing concave part 262 of the right attachment arm 260 and non-rotatably fixes with respect to the right attachment arm 260 is formed in a projecting manner on an outer peripheral surface of the cover side cam 170. An insertion hole 174 for inserting the shaft 140 is formed at the center of the cover side cam 170. The insertion hole 174 has a rotation engagement surface (not shown), which cross section has a shape in which one part of a circle is cut out, where the cutout surface 143 of the inserted shaft 140 comes into surface contact with the rotation engagement surface. Therefore, the shaft 140 and the cover side cam 170 are fixed so as not to relatively rotate. Two rotation engagement convex parts 171 projecting towards the main body side cam 150, and two slopes 172 of circular arc shape seen from the pivot axis direction inclined in one line in side view from the apex of one rotation engagement convex part 171 towards a base of the other rotation engagement convex part 171 are formed on a surface facing the main body side cam 150 of the cover side cam 170. The slope 172 is formed to an inclination in which a side on which the hill shaped convex part 153 of the main body side cam 150 is positioned in the closed state is high, and a side on which the hill shaped convex part 153 of the main body side cam 150 is positioned in the opened state is low. A perpendicular surface 171 a perpendicular to the pivot axis direction is formed on a side opposite to the slope 172 of the rotation engagement convex part 171.

The open/close stabilizing member 250 is configured by a ring shaped ring part 251 and a base part formed at one location of the ring part 251, where an insert attachment hole 255 for allowing insert attachment of a distal end of the right attachment arm 260 is formed at the base part. An open/close stabilizing projection 252 and an engagement releasing inclined surface 253 connected to the open/close stabilizing projection are formed at a surface on the engagement releasing member 240 side of the base part.

The right attachment arm 260 is formed symmetric to the left attachment arm 210, and is formed with a screw hole 263, an insert attachment hole 261, and a rotation engagement surface 262.
The boss 269 is a cylindrical member having a head part of a large diameter on the upper surface, and is formed with a screw hole for screw attaching the screw N4 at the center.
The lateral rotation base 270 is a substantially plate shaped member, and is formed with an insertion hole 272 for inserting the boss 269, and screw holes 271, 271 for screw fitting the screw N3.

The fixing cam 280 is a plate shaped member having a cam groove 282 of a V-shape at a first end side, and is formed with an insertion hole 231 allowing insertion of the boss 269 and screwing the same with the screw N4.

The hinge device 110 configured by such components has the stopper 120, the shaft 140, the cover side cam 170, the left attachment arm 210, the open/close stabilizing member 250, and the right attachment arm 260 forming an integrated cover side unit and non-rotatably fixed in the pivoting direction to the cover 102, and the main body side housing 130, the main body side cam 150, the supporting arm 230, the engagement releasing member 240, and the lateral rotation base 270 forming an integrated lateral rotation unit and rotatably attached in a lateral direction to the fixing cam 280 that becomes the main body side unit. Therefore, the cover side unit and the lateral rotation unit relatively rotate in the opening/closing direction with the pivoting in the opening/closing direction of the cover 102 and the main body 107. In regards to such rotation, the pivot spring 125 is constantly biased in the opening direction, and the press spring 145 biases the main body side cam 150 to constantly press the cover side cam 170.

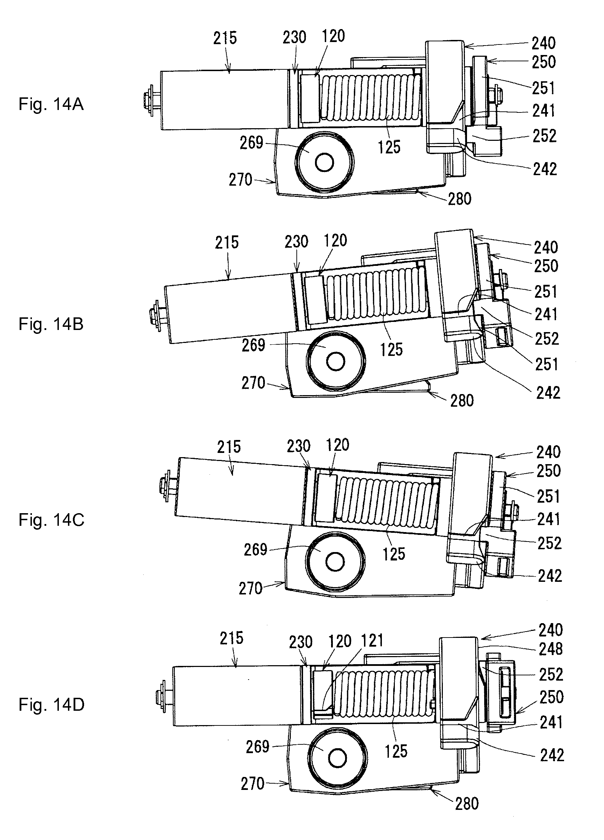

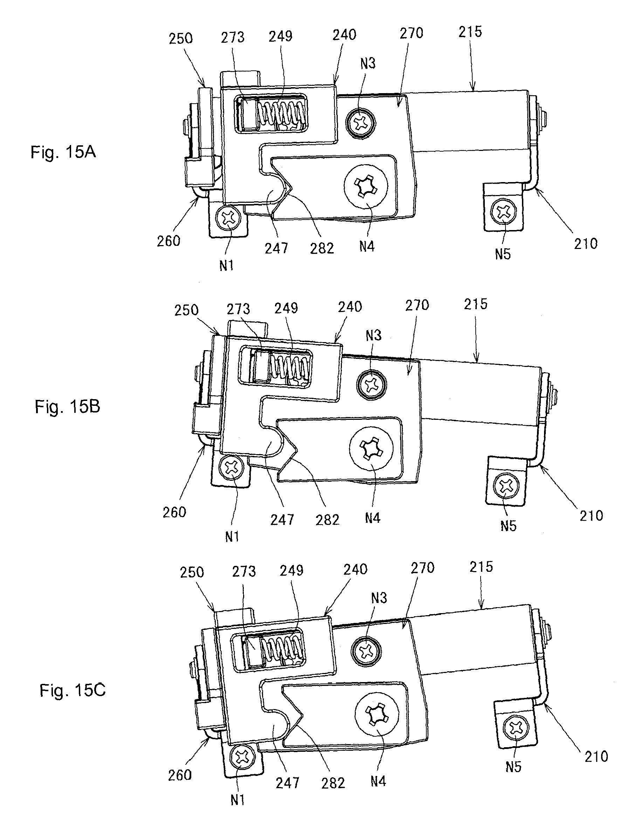

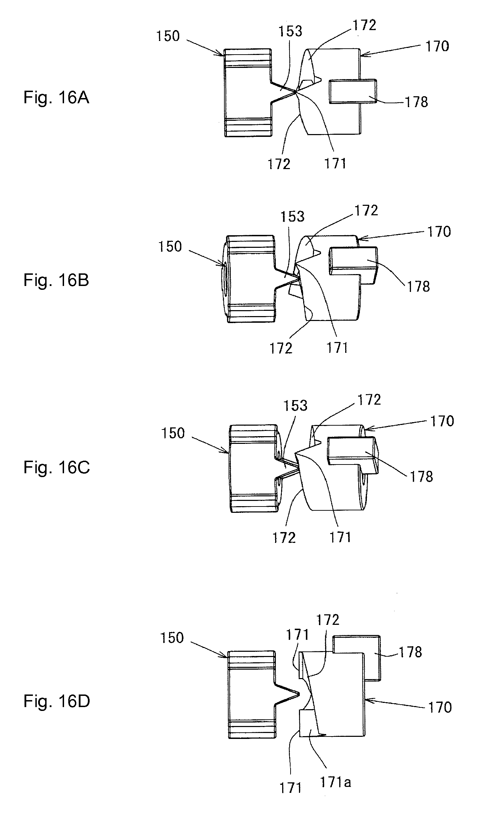

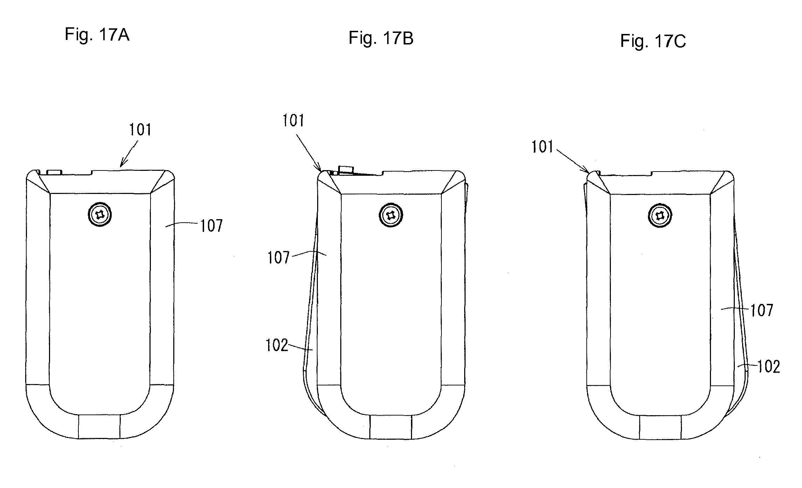

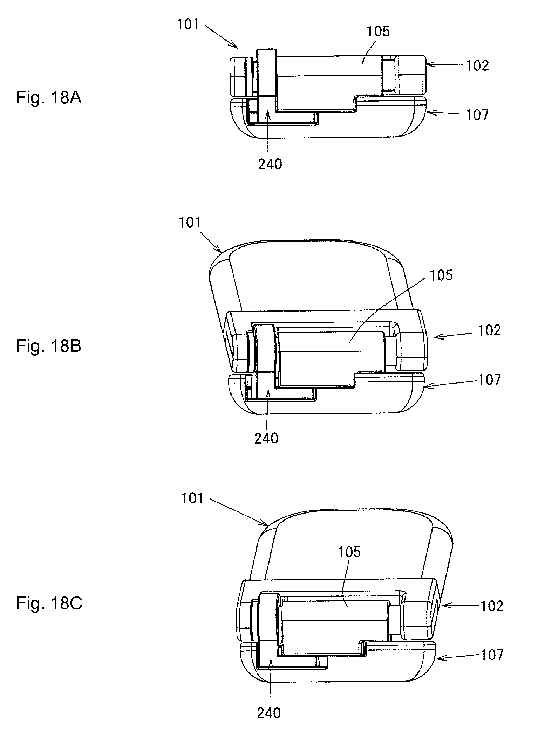

FIG. 14 shows an explanatory view describing the rotating operation of the hinge device 110 in front view, FIG. 15 shows an explanatory view describing the rotating operation of the hinge device 110 in rear view, FIG. 16 shows an explanatory view describing a position of the main body side cam 150 with respect to the cover side cam 170 during the rotating operation, FIG. 17 shows an explanatory view describing the rotating operation of the portable telephone 101 in rear view, and FIG. 18 shows an explanatory view describing the rotating operation of the portable telephone 101 in top view.

As shown in (A), in the closed state in which the cover 102 and the main body 107 of the portable telephone 101 (see FIG. 18) are closed, the hill shaped convex part 153 of the main body side cam 150 (see FIG. 16) is positioned at a position on the perpendicular surface 171 a side from the apex of the rotation engagement convex part 171 of the cover side cam 70. In this state, an inclined surface 153a on the opening operation engagement side of the hill shaped convex part 153 contacts and rotatably engages the apex of the rotation engagement convex part 171 by the biasing force in the axial direction of the press spring 145. That is, the biasing force in the opening/closing direction of the pivot spring 125 attempts to rotate the main body side cam 150 in the opening direction (direction of arrow Y2) with respect to the cover side cam 170, but the press biasing force in the axial direction of the press spring 145 excels the rotation biasing force, and thus as a whole, is biased in the closing direction and stopped in the non-rotatable state.

As shown in (B), when the cover 102 of the portable telephone 101 (see FIG. 18) are slightly laterally rotated to the right with respect to the main body 107 by the user, or as shown in (C), when the cover 102 is slightly laterally rotated to the left with respect to the main body 107, the engagement releasing member 240 slidably moves to an outer side in the left and right direction, as shown in FIG. 15. That is, the slide projection 247 of the engagement releasing member 240 contacts the cam groove 282 of the fixed cam 280 non-rotatably fixed to the main body 107, whereby the slide projection 247 is pushed out by the cam groove 282 and the engagement releasing inclined surface 253 (see FIG. 13) of the open/close stabilizing member 250 is pressed. Thus, the open/close stabilizing member 250 rotates in the opening direction by the influence of the pressing of the engagement releasing inclined surface 253.

When the rotation by hand exceeds a constant angle, the state changes from the state shown in FIG. 16A to the state shown in FIG. 16B, where the hill shaped convex part 153 of the main body side cam 150 rides over the rotation engagement convex part 171 of the cover side cam 170, and the rotation engagement is released. Thus, similar to example 1, the pivot in the opening direction is automatically performed by the biasing force of the pivot spring (correspond to pivot spring 25 of example 1) and the press spring 145 (correspond to press spring 45 of example 1).

Therefore, the hill shaped convex part 153 of the main body side cam 150 slidably moves on the slope 172 of the cover side cam 170 while automatically pivoting in the opening direction by the biasing force of the pivot spring 125 and the press spring 145. When rotated in the opening direction for greater than or equal to a constant amount, the apex of the open/close stabilizing projection 252 of the open/close stabilizing member 250 contacts the guide surface 248 of the engagement releasing member 240. Thus, the engagement releasing member 240 cannot slide in the left and right direction, and the cover 102 and the main body 107 cannot rotate so as to shift in the lateral direction, whereby stable opening/closing of the cover 102 and the main body 107 is realized.

The subsequent opening operation up to the fully opened position and the closing operation from the fully opened position to the closed position are the same as example 1, and thus detailed description will be omitted.

According to the hinge device 110 of example 2 described above, the semi-auto opening operation of automatically rotating in the opening direction and changing to the fully opened state by merely shifting the cover 102 and the main body 107 in the lateral direction is realized.

In the closed state, the cover 102 and the main body 107 are slightly pivoted so as to be shifted when the open/close stabilizing projection 252 of the open/close stabilizing member 250 enters the concave part 241 of the engagement releasing member 240.

After rotated in the opening direction of greater than or equal to a constant amount, the open/close stabilizing projection 252 of the open/close stabilizing member 250 contacts the guide surface 248 of the engagement releasing member 240 thereby achieving stable rotation without shift in the left and right direction.

Therefore, the hinge device 110 having very satisfactory operability and having stable open/close operation is obtained.

### [Example 3]

The hinge device 310 of example 3 will now be described. The hinge device 310 has a mechanism similar to example 2 described above, but additionally has a function of automatically rotation operating the cover 102 (see FIG. 17 of example 2) and the main body 107 by shifting them in the left and right direction in an overlapped state.

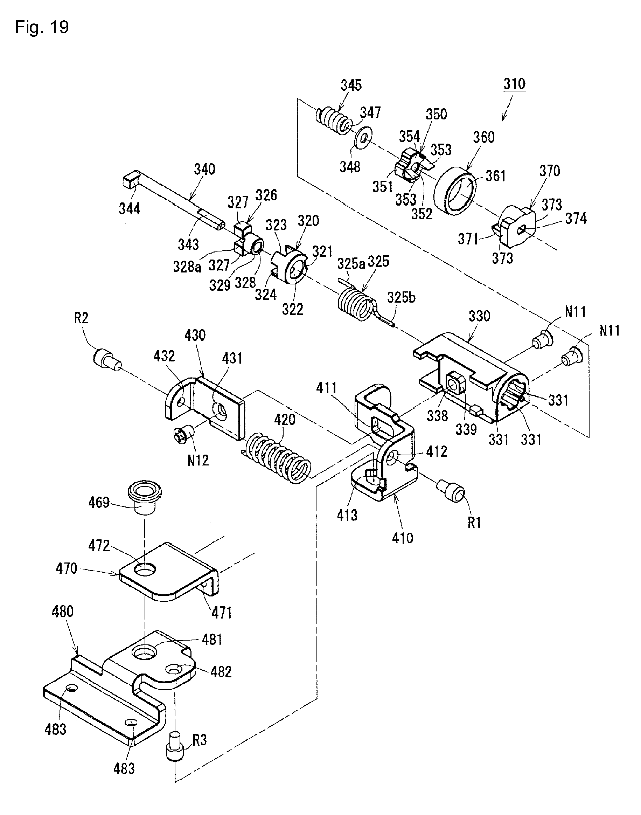

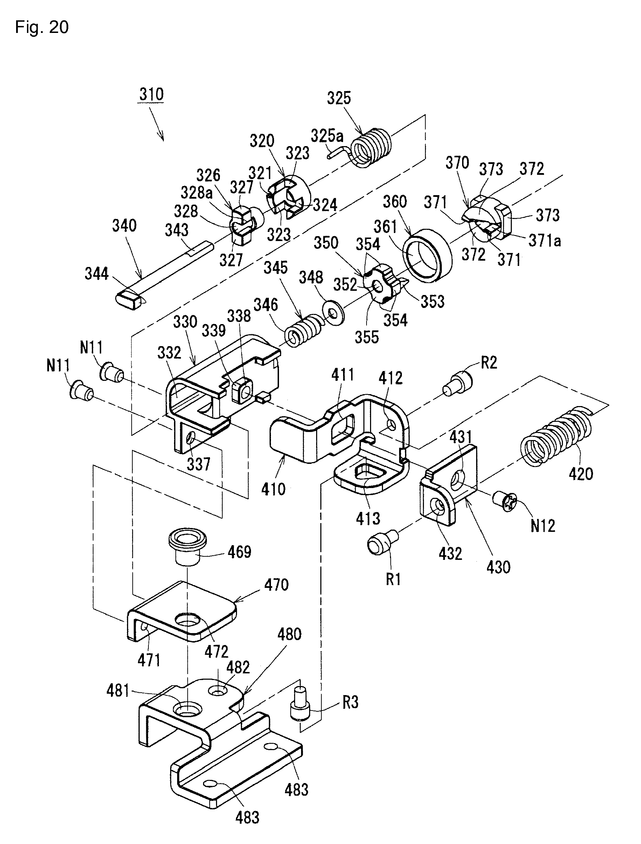

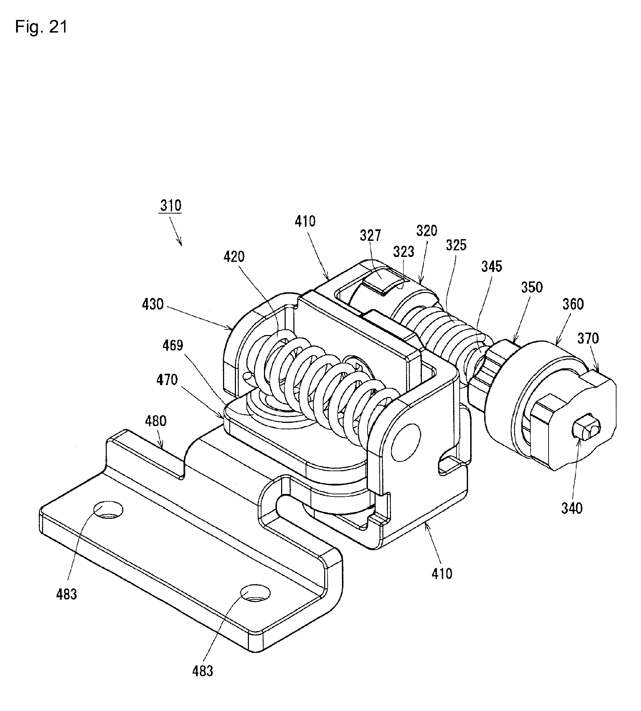

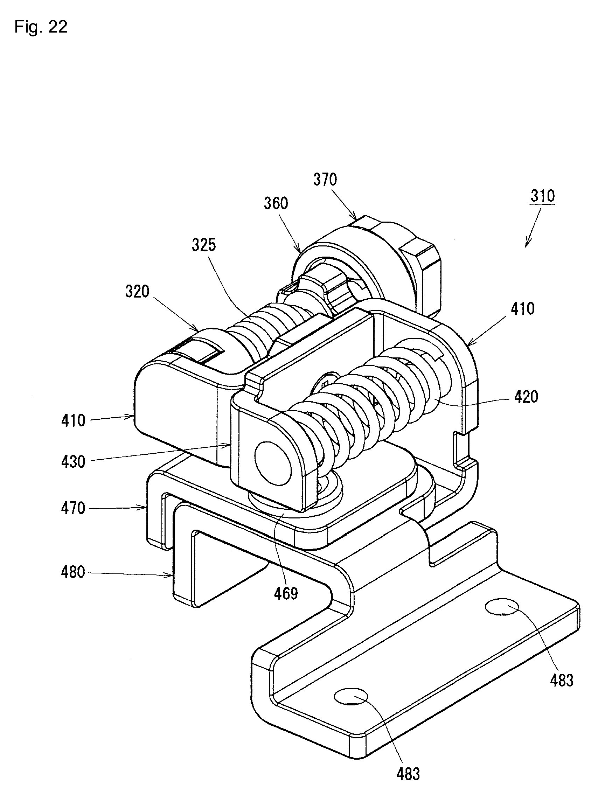

FIGS. 19 and 20 show exploded perspective views of the hinge device 310, and FIGS. 21 and 22 show perspective views of a state in which a housing of the hinge device 310 is detached.
The hinge device 310 is mainly configured by a shaft 340, a fixed member 326, a stopper 320, a pivot spring 325, a main body side housing 330, a press spring 345, a washer 348, a main body side cam 350, a cover side housing 360, a cover side cam 370, a slide cam 410, a supporting plate 430, a rotation base 470, and a fixed base 480.

The shaft 340 overall formed to a substantially columnar shape and has a terminating end projection 344 that engages the fixed member 326 and the stopper 320 formed at a first end of the shaft 340. A cutout surface 343 is formed at a second end of the shaft 340 by cutting out one side surface of the columnar shape.

The fixed member 326 is formed with an insertion hole 328 for inserting the shaft 340 and an engagement projection 327 for engaging with the stopper 320. A guide hole 328a that contacts the terminating end projection 344 of the shaft 340 is formed on the engagement projection 327 side of the insertion hole 328. The guide hole 328a is formed longer than the axial length of the terminating end projection. Thus, the fixed member 326 slidably moves in the axial direction with respect to the shaft 340. A press supporting end face 329 (FIG. 19) that comes into surface contact with a first end face 346 (FIG. 20) of the press spring 345 and supports the pressing is formed at an end of the fixed member 326.

The stopper 320 is formed to a substantially cylindrical shape, and is formed with an insertion hole 322 to which the fixed member 326 is inserted. Engagement concave part 323 for engaging the engagement projection 327 of the fixed member 326 and the engagement concave part 324 for engaging the terminating end projection 344 of the shaft 340 are arranged on a first end side of the stopper 320. Therefore, the shaft 340, the stopper 320, and the fixed member 326 are fixed so as not to relatively rotate. A pivot spring attachment groove 321 for fixing a first end 325a of the pivot spring 325 is formed on an outer peripheral surface of the stopper 320.

The pivot spring 325 is a spiral shaped helical spring and is formed to a size that an inner periphery of the pivot spring 325 is larger than an outer periphery of the press spring 345. The pivot spring 325 has the first end 325a and a second end 325b standing up in the axial direction formed at both ends. The pivot spring 325 has the first end 325a attached to the pivot spring attachment groove 321 of the stopper 320 and the second end 325b attached to the inside of the main body side housing 330.

The main body side housing 330 is formed with an insertion hole 332 (FIG. 20) on the stopper 320 side for inserting the stopper 320. The inner periphery of the insertion hole 332 is formed to a size slightly larger than the outer periphery of the stopper 320, and is configured so that the stopper 320 rotates without stress inside the insertion hole 332. A slide groove 331 to be inserted with and non-rotatably fixing the main body side cam 350 is formed on a side opposite of the insertion hole 332 of the main body side housing 330. A space communicating from the insertion hole 332 to the slide groove 331 is created inside the main body housing 330, and the press spring 345 inserted with the shaft 340 is inserted in a freely extending and compressing manner. A pivot spring attachment hole (not shown) is formed inside the main body side housing 330, and the second end 325b of the pivot spring 325 is attached and fixed in the pivot spring attachment hole.

A guide projection 339 is arranged on one side surface of the main body side housing 330, and a screw hole 338 is formed at the center of the guide projection. The guide projection 339 is formed to a substantially square shape, and engages a rectangular guide hole 411 formed in the slide cam 410. Thus, the slide cam 410 and the main body side housing 330 have a configuration of slidably moving with respect to each other in the axial direction of the shaft 340. The screw hole 337 for fixing the rotation base 470 is formed at a bottom surface of the main body side housing 330.

The press spring 345 is a spiral shaped helical spring, and is formed to a size that an inner periphery of the press spring 345 is larger than the outer periphery of the shaft 340, and an outer periphery of the press spring 345 can be inserted to the inside of the main body side housing 330 and the inside of the pivot spring 325. The press spring 345 is formed to a spiral shape not only at the core part but up to both ends. The press spring 345 has the first end face 346 coming into surface contact with the press supporting end face 329 of the stopper 320, and a second end face 347 coming into surface contact with the washer 348 so as to be sandwiched between the stopper 320 and the washer 348.

The washer 348 has the inner periphery of a size allowing the shaft 340 to be inserted in a freely rotating manner, and is formed to a size that the second end face 347 of the press spring 345 can be reliably came into surface contact with the washer 348.

An engagement projection 351 that engages and attaches in a non-rotatable manner and in a slidable manner in the pivot axis direction to the slide groove 31 of the main body side housing 330 is formed on an outer periphery of the main body side cam 350. The engagement projection 351 is formed so that a thickness in the pivot axis direction is shorter than the length in the pivot axis direction of the slide groove 331. An insertion hole 352 for inserting the shaft 340 in a freely rotating manner is formed at the center of the main body side cam 350. Two hill shaped convex parts 353 of hill shape having two inclined surfaces 353a in the rotating direction are formed symmetric to the center axis on an opposing surface 354 with respect to the cover side cam 370 of the main body side cam 350. The hill shaped convex part 353 is formed slightly on the inner side than the engagement projection 351 projecting the most in the radial direction in the main body side cam 350. A smooth surface 355 to which the washer 348 contacts is formed on a surface opposite to the opposing surface 354 of the main body side cam 350.

The cover side housing 360 is formed to a cylindrical ring shape, and the inner periphery is formed to a size that the main body side cam 350 and the cover side cam 370 can both be inserted. Thus, the main body side cam 350 accommodated in the slide groove 331 of the main body side housing 330 slidably moves in the pivot axis direction, projects out from the main body side housing 330, and has one part inserted to the inside of the cover side housing 360. Thus, the slide movement in the pivot axis direction of the main body side cam 350 is stabilized with the main body side housing 330 and the main body side cam 350 maintaining a relatively non-rotatable state in the slide groove 331, and furthermore, the cover side housing 360 and the main body side housing 330 can relatively rotate even if the main body side cam 350 is projected out from the main body side housing 330 and partially inserted into the cover side hosing 360 since the inner surface 361 of the cover side housing 330 is formed to a circular shape.

A fixing projection 373 that engages the cover 102 (see FIG. 17 of example 2) and non-rotatably fixes with respect to the cover 102 is formed in a projecting manner on an outer peripheral surface on the cover side cam 370. An insertion hole 374 for inserting the shaft 340 is formed at the center of the cover side cam 370. The insertion hole 374 has the cross section of a shape in which one part of the circle is cutout, where the cutout surface 343 of the inserted shaft 340 comes into surface contact with a cutout surface of the insertion hole 374. Therefore, the shaft 340 and the cover side cam 370 are fixed so as not to relatively rotate. Two rotation engagement convex parts 371 projecting towards the main body side cam 350 side and two slopes 372 of circular arc seen from the pivot axis direction inclined in one line in side view from the apex of one rotation engagement convex part 371 towards a base of the other rotation engagement convex part 371 are formed on a surface facing the main body side cam 350 of the cover side cam 370. The slope 372 is formed to an inclination in which a side on which the hill shaped convex part 353 of the main body side cam 350 is positioned in the closed state is high and a side on which the hill shaped convex part 353 of the main body side cam 350 is positioned in the opened state is low. A perpendicular surface 371 a perpendicular to the pivot axis direction is formed on a side opposite to the slope 372 of the rotation engagement convex part 371.

The slide cam 410 is formed by bending a sheet metal member, and a horizontally long rectangular guide hole 411 that engages the guide projection 339 of the main body side housing 330 is formed at the center. The guide projection 339 slidably moves in the left and right direction in the guide hole 411. A supporting part 415 projecting towards the main body side housing 330 and supporting the fixed member 326 from the left to the right is arranged on a left side of the slide cam 410. An attachment hole 412 for attaching a rivet R1 to a portion projecting to the opposite side of the main body side housing 330 is formed at a right side of the slide cam 410. A home base shaped cam hole 413 having a V-shaped portion is formed on a lower right side of the slide cam 410. The cam hole 413 is configured such that the center line passing through the apex of the V-shaped portion coincides with the radial direction having the boss 469 after assembly as the center, and is parallel to the axial direction of the shaft 340.

The supporting plate 430 is configured by a sheet metal member bending processed to an L-shape, and an attachment hole 432 for attaching a rivet R2 and a screw hole 431 for attaching a screw N12 are formed. The screw N 12 is inserted to the screw hole 431 and screw attached to the screw hole 338 of the main body side housing 330, so that the main body side housing 330 and the supporting plate 430 are integrated and the slide cam 410 is slidably supported in the axial direction (left and right direction).

A coil spring 420 having both ends supported by rivets R1, R2 is attached between a left side projection piece of the supporting plate 430 and a right side projection piece of the slide cam 410. The coil spring 420 is biased in a direction of separating the supporting plate 430 and the slide cam 410 in the axial direction of the shaft 340.

The rotation base 470 is a sheet metal bending formed to an L-shape, and a screw hole 471 for screwing with a screw hole 337 of the main body side housing 330 by the screw N11 is formed. An insertion hole 472 for rotatably inserting the boss 469 is also formed.

An insertion hole 472 for rotatably inserting the boss 469, an attachment hole 482 for attaching a rivet R3 from below, and a screw hole 483 for screwing to the main body side unit are formed in the fixed base 480. The attachment hole 482 is arranged at a position that the attached rivet R3 enters the cam hole 413 of the slide cam 410.

The hinge device 310 configured by such components has the stopper 320, the fixed member 326, the shaft 340, the cover side housing 360, and the cover side cam 370 forming an integrated cover side unit and non-rotatably fixed in the pivoting direction to the connecting part of the cover 102 (see FIG. 17 of example 2), and the main body side housing 330, the main body side cam 350, the slide cam 410, the supporting plate 430, the rotation base 470, and the fixed base 480 forming an integrated main body side unit, and non-rotatably fixed in the pivoting direction to the connecting part of the main body 107. Therefore, the cover side unit and the main body side unit relatively rotate with the pivoting in the opening/closing direction of the cover 102 and the main body 107. In regards to such rotation, the pivot spring 325 is constantly biased in the opening direction, and the press spring 345 biases the main body side cam 350 to constantly press the cover side cam 370.

The main body side unit is configured by the main body side fixed unit formed by the fixed base 480, and the main body side rotation unit formed by the main body side housing 330, the main body side cam 350, the slide cam 410, the supporting plate 430, and the rotation base 470. The main body side rotation unit is overlapped to the main body side fixed unit with the boss 469 as the center and slidably rotated in the lateral direction.

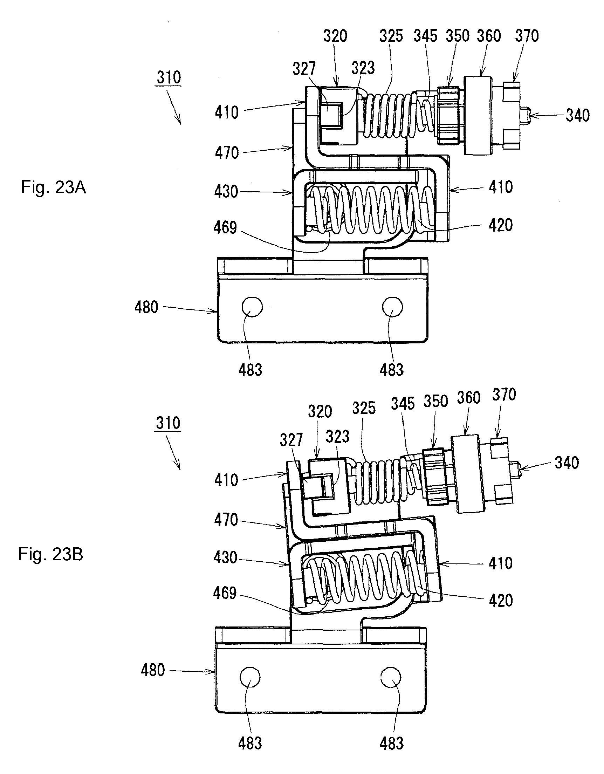

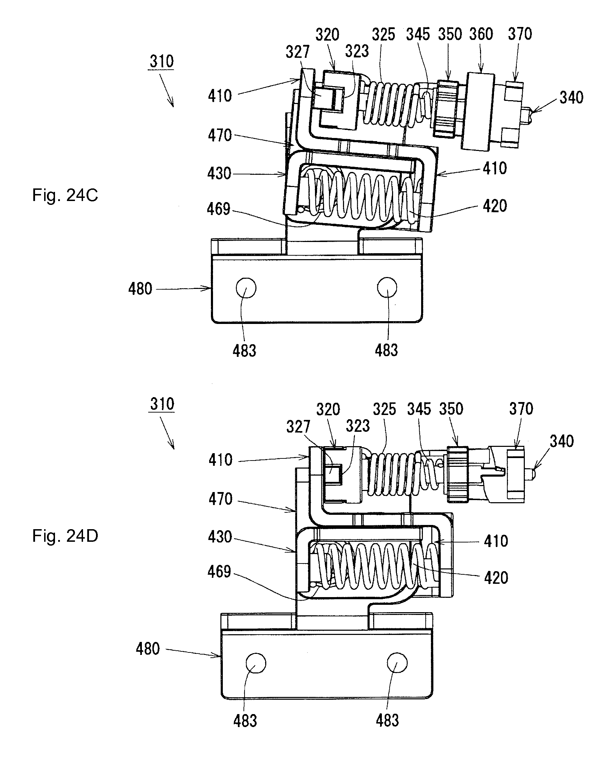

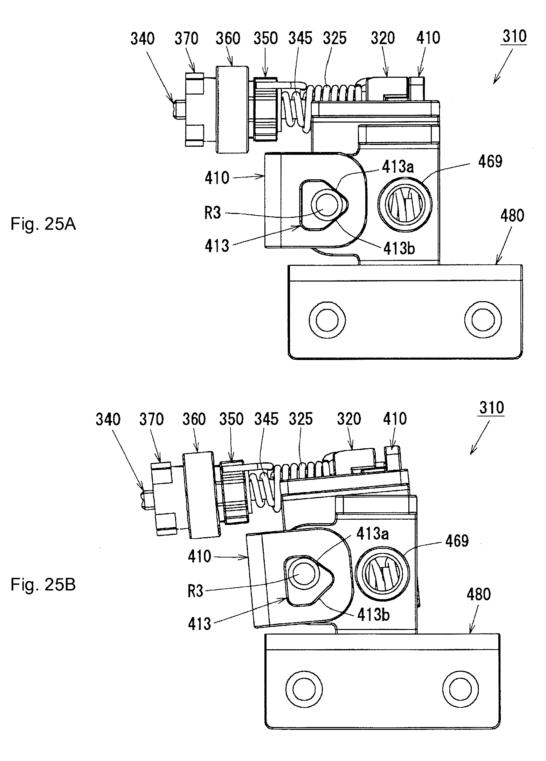

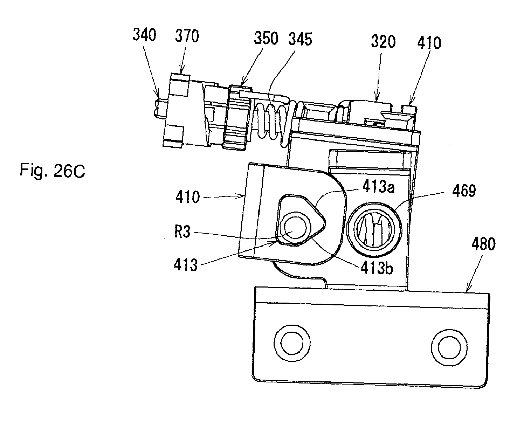

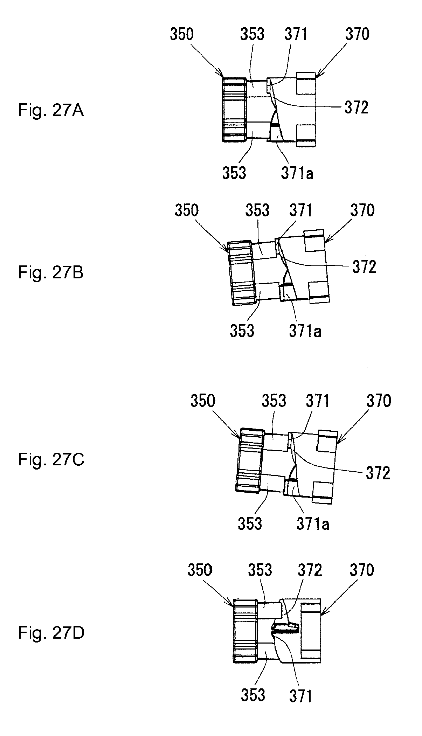

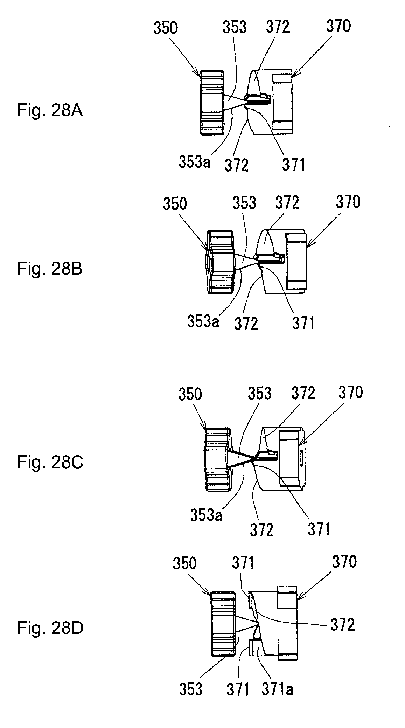

FIGS. 23 and 24 show explanatory views describing the rotating operation of the hinge device 310 in front view, FIGS. 25 and 26 show explanatory views describing the rotating operation of the hinge device 310 in front view with the main body side housing 330 and the cover side housing 360 which are omitted, FIGS. 27 and 28 show explanatory views describing a position of the hill shaped convex part 353 of the main body side cam 350 with respect to the cover side cam 370 during the rotating operation.

As shown in (A), in the closed state in which the cover 102 and the main body 107 of the portable telephone 101 (see FIG. 17 of example 2) are closed, the hill shaped convex part 353 of the main body side cam 350 (see FIG. 27) is positioned on a perpendicular surface 371 a side from the apex of the rotation engagement convex part 371 of the cover side cam 370. In this state, an inclined surface 353a on the opening operation engagement side of the hill shaped convex part 353 contacts and rotatably engages the apex of the rotation engagement convex part 371 by the biasing force in the axial direction of the press spring 345 (see FIG. 25). That is, the biasing force of the pivot spring 325 attempts to rotate the main body side cam 350 in the opening direction with respect to the cover side cam 370, but the press biasing force of the press spring 345 excels the rotation biasing force, and thus as a whole, is biased in the closing direction, and stopped in the non-rotatable state.

As shown in (B), when the cover 102 and the main body 107 of the portable telephone 101 (see FIG. 17 of example 2) are slightly laterally rotated to the right with respect to the main body 107 by the user, or as shown in (C), when the cover 102 is slightly laterally rotated to the left with respect to the main body 107, the slide cam 410 slightly lateral rotates in the left and right direction with the boss 469 as the center. As shown in FIGS. 25 and 26, the guide part 413a or guide part 413b in the cam hole 413 of the slide cam 410 and the rivet R3 engage, and the slide cam 410 slidably moves to an outer side in the left and right direction against the biasing force of the coil spring 420. In other words, the rivet R3 of the fixed base 480 non-rotatably fixed to the main body 107 contacts the cam hole 413 of the slide cam 410, and the guide part 413a or the guide part 413b is pressed against thereto by the rivet R3.
According to such pressing action, the slide cam 410 slidably moves, and the fixed member 326 supported by the supporting part 415 of the slide cam 410 also slidably moves to the other side in the left and right direction. When the supporting part 415 slidably moves, a distance between the supporting part 415 and the main body side cam 350 widens, and the biasing force (pressing force) of the press spring 345 arranged in between and biasing them in a separating direction becomes weak.

When the rotation by hand exceeds a constant angle, the rotation engagement force by the biasing force of the press spring 345 becomes weaker than the rotation force by the biasing force of the pivot spring 325, and thus the state changes from the state shown in (A) to the state shown in (B), and rotation engagement is released.

In other words, since the biasing force of the pivot spring 325 excels the biasing force of the press spring 345, the hill shaped convex part 353 of the main body side cam 350 rides over the rotation engagement convex part 371 of the cover side cam 370, and rotation engagement is released. Similar to example 1, pivot in the opening direction is automatically performed by the biasing force of the pivot spring 325 (correspond to pivot spring 25 of example 1) and the press spring 345 (correspond to press spring 45 of example 1).

The subsequent opening operation up to the fully opened position and the closing operation from the fully opened position to the closed position are the same as example 1, and thus detailed description will be omitted.

According to the hinge device 310 of example 3 described above, the semi-auto opening operation of automatically rotating in the opening direction and changing to the fully opened state by merely shifting the cover 102 and the main body 107 in the lateral direction is realized.
Therefore, the hinge device 310 having very satisfactory operability and having stable open/close operation is obtained.

In correspondence of the configuration of the invention and the embodiment,
the portable terminal of the invention corresponds to portable telephones 1, 101, 301 of the embedment, and similarly,
first housing corresponds to the cover 2, 102;
display unit corresponds to the liquid crystal screen of the display surface 3;
input mean corresponds to the input key of the key arrangement surface 6;
second housing corresponds to the main body 7, 107:
hinge mechanism corresponds to the hinge device 10, 110, 310;
pivot biasing unit corresponds to the pivot spring 25, 125, 325;
press biasing unit corresponds to the press spring 45, 145 ,345;
first cam corresponds to the main body side cam 50, 150, 350;
first convex part corresponds to the hill shaped convex part 53, 153, 353;
one contacting part and inclined surface corresponds to the inclined surface 53a, 153a, 353a;
first opposing surface corresponds to the opposing surface 54, 154, 354;
second cam corresponds to the cover side cam 70, 170, 370;
second convex part corresponds to the rotation engagement convex part 71, 171, 371;
other contacting part corresponds to the apex of the rotation engagement convex part 71, 171, 371;
second opposing surface corresponds to the surface arranged with the slope 72, 172, 372;
pivot attachment part corresponds to the boss 269, 469;
engagement releasing unit corresponds to the engagement releasing convex part 242 and the engagement releasing inclined surface 253 or the slide cam 410 and the rivet R3;
direction of approaching each other corresponds to arrow Y1; and opening direction corresponds to arrow Y2;
where the present invention is not limited to only the configuration of the embodiment, and also includes various other embodiments.

## Claims

1. A hinge mechanism for connecting a first housing and a second housing, which configure a portable terminal, in a foldable opening/closing manner through pivoting; the hinge mechanism comprising:
a first cam including a first convex part projecting in a pivot axis direction at around a pivot axis, and being fixed to the first housing;
a second cam including a second convex part which engages the first convex part of the first cam projecting in the pivot axis direction at around the pivot axis, and being fixed to the second housing;
a press biasing unit for press biasing the first cam and the second cam in a direction of approaching each other with a first opposing surface including the first convex part and a second opposing surface including the second convex part opposing each other; and
a pivot biasing unit for biasing so that the first cam and the second cam relatively pivot in an opening direction with the pivot axis as the center; wherein
at least one of contacting parts at where the first convex part and the second convex part contact each other when stopping the pivoting in the opening direction by the pivot biasing unit is formed by an inclined surface inclining in a pivoting direction; and
the press biasing unit has a press biasing force of a strength that the other contacting part does not ride over the inclined surface by the pivot bias of the pivot biasing unit.

2. A hinge mechanism according to claim 1, wherein a slope for assisting the pivot by the pivot biasing unit using the press biasing force of the press biasing unit is arranged on the first opposing surface or the second opposing surface.

3. A hinge mechanism according to claim 1 or 2, further comprising:
a pivot attachment part for allowing pivoting to shift the first housing and the second housing in a folded state in which the first housing and the second housing overlap; and
an engagement releasing unit for releasing rotational engagement in the opening direction of the first cam and the second cam by the press biasing unit when the first housing and the second housing are pivoted so as to be shifted.

4. A portable terminal comprising:
the hinge mechanism, the first housing, and the second housing according to claim 1, 2, or 3; and
a display unit for displaying an image on one of the first housing or the second housing; wherein
an input unit for enabling input operation is arranged on the other housing.
